# EUROPEAN PATENT SPECIFICATION

(11) **EP 4 677 758 B1**
(45) Date of publication and mention of the grant of the patent: **17.06.2026**
(21) Application number: 23710737.0
(22) Date of filing: 09.03.2023
(51) Int. Cl.: H04B 7/04

(54) **SUPPORT OF MULTIPATH WIRELESS COMMUNICATION FOR A USER EQUIPMENT**
UNTERSTÜTZUNG VON DRAHTLOSER MEHRWEGKOMMUNIKATION FÜR EIN BENUTZERGERÄT
PRISE EN CHARGE D'UNE COMMUNICATION SANS FIL À TRAJETS MULTIPLES POUR UN ÉQUIPEMENT UTILISATEUR

(43) Date of publication of application: 14.01.2026
(73) Proprietor: Telefonaktiebolaget LM Ericsson (publ), 164 83 Stockholm (SE)
(72) Inventor: LJUNG, Rickard, 256 59 HELSINGBORG (SE); SJÖLAND, Henrik, 224 68 LUND (SE); MAHDAVI, Mojtaba, 224 68 LUND (SE); HE, Shousheng, 247 35 SÖDRA SANDBY (SE); OLSSON, Magnus, 218 52 KLAGSHAMN (SE)
(74) Representative: Ericsson
(86) International application number: PCT/EP2023/056049
(87) International publication number: WO 2024/183921

(56) References cited:
- WO-A1-2022/133957
- WO-A1-2022/193112
- WO-A1-2023/028409

## Description

### TECHNICAL FIELD

Embodiments presented herein relate to a method, a user equipment, a computer program, and a computer program product for requesting support of multipath wireless communication for the user equipment via a reconfigurable intelligent surface.

### BACKGROUND

A reconfigurable intelligent surface (RIS) offers an opportunity for improved wireless communication. Specifically, significant gains are envisioned to be made for millimetre wave spectrum, which is used in fifth generation and sixth generation telecommunication systems. This spectrum has serious challenges when it comes to propagation and coverage, e.g., due to its very high frequency ranges in tens of GHz. The challenges are larger compared to challenges for spectrum with lower frequencies e.g., for so-called sub-6GHz frequency bands.

RISs represent an emerging technology that is capable of intelligently manipulating the propagation of electro-magnetic waves. A RIS is commonly also referred to as a large intelligent surface, a smart reflect-array, an intelligent reflecting surface, a passive intelligent mirror, an artificial radio space, and a meta-surface.

In general terms, a RIS is composed of a 2-dimensional array of reflecting antenna elements, such as patch antennas, where each antenna element acts as a passive reconfigurable scatterer, i.e., a piece of manufactured material, which can be configured to change (the beam of) an impinging electro-magnetic wave in a customizable way. Such antenna elements are commonly provided as low-cost passive surfaces that do not require dedicated power sources, and the radio waves impinged upon them can be forwarded without the need of employing power amplifier or radio chain. Moreover, a RIS can, potentially, operate in full duplex mode without significant self-interference or increased noise level and requires only low-rate control link or backhaul connections. A RIS can be flexibly deployed due to its low weight and low power consumption.

US2022278738A1 teaches that a UE can trigger a RIS detection sensing signal transmission upon receiving RIS information from the network. It is thus the network which manages the RIS assignment to the UEs.

It is hereinafter assumed that the activation and deactivation of the RIS is requested by user equipment (UEs), meaning the network nodes (such as base stations) in the network do not require to control the RIS. In other words, a UE will need to send some kind of request signal to the RIS itself for the RIS to start supporting the UE by reflecting beams of wireless signals as transmitted and/or received by the UE.

WO2020254031A1 teaches that a UE can send a wake-up signal to activate a RIS whenever the UE wants to communicate with another device via the RIS.

WO2023028409A1 enhances sidelink communications between user devices using reconfigurable intelligent surfaces (RIS). A first user equipment (UE) can detect transmissions between other UEs and configure its associated RIS. WO2022193112A1 outlines a method for barring user equipment (UE) from communicating with specific reconfigurable intelligent surfaces (RIS) in a wireless network, allowing base stations to manage RIS usage and prevent overload or interference. The UE receives a barring indication and adjusts its communication behaviour accordingly. WO2022133957A1 presents a framework for integrating reflective intelligent surfaces (RIS) into MIMO wireless systems, detailing mechanisms for RIS discovery, configuration, activation, and dynamic control.

However, it could be that a plurality of UEs sends such request signals within some given time interval or that one UE sends a plurality of request signals for the UE to be continuously supported by the RIS. In such cases there is a risk that the RIS will be overloaded with request signals. In this way the RIS might fail to identify which of the UEs that should be supported by the RIS.

### SUMMARY

An object of embodiments herein is to address the above issues.

A particular object is to ensure that request signals are sent from the UEs only when deemed relevant, needed, and meaningful.

A further particular object is to configure the UEs with some conditions that must be fulfilled for the UEs to send the request signal.

According to a first aspect there is presented a UE for requesting support of multipath wireless communication for the UE via an RIS. The UE comprises processing circuitry. The processing circuitry is configured to cause the UE to verify conditions pertaining to that a communication requirement for an application run in the UE is fulfilled, that hardware components of the UE are available for multipath wireless communication in a radio environment of the UE, and that the radio environment is not supportive of the multipath wireless communication unless the RIS is activated to support the UE. The processing circuitry is configured to cause the UE to, in response thereto, send a request signal to a controller entity of the RIS to activate the RIS to reflect beams of wireless signals as transmitted and/or received by the UE.

According to a second aspect there is presented a UE for requesting support of multipath wireless communication for the UE via an RIS. The UE comprises a verify module (210a) configured to verify conditions pertaining to that a communication requirement for an application run in the UE is fulfilled, that hardware components of the UE are available for multipath wireless communication in a radio environment of the UE, and that the radio environment is not supportive of the multipath wireless communication unless the RIS is activated to support the UE. The UE comprises a send module configured to, in response to the conditions having been verified, send a request signal to a controller entity of the RIS to activate the RIS to reflect beams of wireless signals as transmitted and/or received by the UE.

According to a third aspect there is presented a method for requesting support of multipath wireless communication for a UE via an RIS. The method is performed by the UE. The method comprises verifying conditions pertaining to that a communication requirement for an application run in the UE is fulfilled, that hardware components of the UE are available for multipath wireless communication in a radio environment of the UE, and that the radio environment is not supportive of the multipath wireless communication unless the RIS is activated to support the UE. The method comprises, in response thereto, sending a request signal to a controller entity of the RIS to activate the RIS to reflect beams of wireless signals as transmitted and/or received by the UE.

According to a fourth aspect there is presented a computer program for requesting support of multipath wireless communication for the UE via an RIS. The computer program comprises computer code which, when run on processing circuitry of a UE, causes the UE to perform actions. One action comprises the UE to verify conditions pertaining to that a communication requirement for an application run in the UE is fulfilled, that hardware components of the UE are available for multipath wireless communication in a radio environment of the UE, and that the radio environment is not supportive of the multipath wireless communication unless the RIS is activated to support the UE. One action comprises the UE to, in response thereto, send a request signal to a controller entity of the RIS to activate the RIS to reflect beams of wireless signals as transmitted and/or received by the UE.

According to a fifth aspect there is presented a computer program product comprising a computer program according to the fourth aspect and a computer readable storage medium on which the computer program is stored. The computer readable storage medium could be a non-transitory computer readable storage medium.

Advantageously, these aspects resolve the above issues, thereby reducing the risks of the RIS (actually, the controller entity) to be overloaded.

Advantageously, these aspects ensure that request signals are sent from the UE only when deemed relevant, needed, and meaningful, and hence only when there is an opportunity for the UE to take benefit from support by the RIS.

Advantageously, these aspects enable the UE to send a request signal only when some conditions are fulfilled.

Advantageously, these aspects enable the RIS (actually, the controller entity) to receive request signals only when support by the RIS is beneficial for the UE.

Advantageously, these aspects do not require any modification of the functionality of the RIS.

Advantageously, these aspects enable the amount of control signalling to be reduced. Such a reduction of control signaling reduces the interference levels in the system and reduces the need to allocate transmit resources for the wireless spectrum for control signaling.

Advantageously, these aspects enable the energy consumption in the UE as well as in the RIS to be reduced. This is due to lower number of request signals are transmitted by the UE and due to less request signals to be received, processed, and evaluated in the RIS (actually, the controller entity).

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Fig. 2 is a schematic diagram illustrating an RIS according to embodiments;
Figs. 3 and 4 are flowcharts of methods according to embodiments;
Fig. 5 is a schematic diagram showing functional units of a UE according to an embodiment;
Fig. 6 is a schematic diagram showing functional modules of a UE according to an embodiment; and
Fig. 7 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

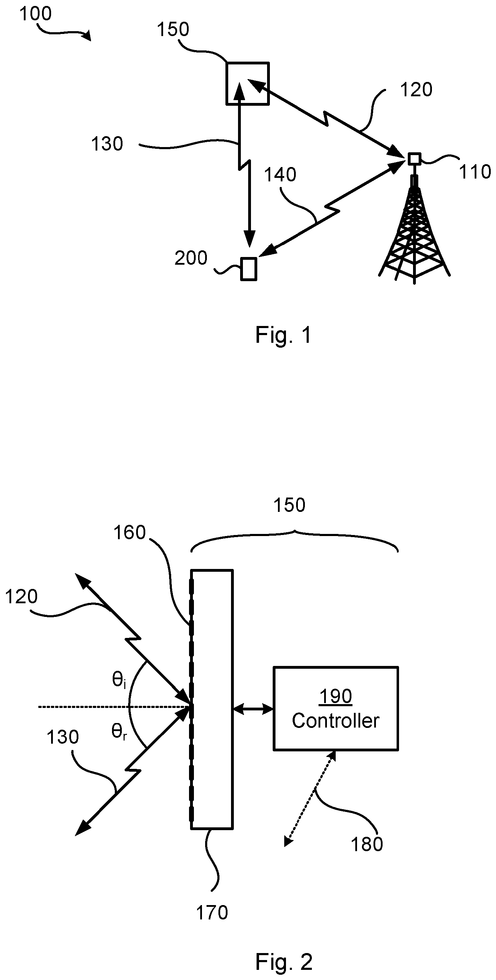

**Fig. 1** is a schematic diagram illustrating a communication network 100 where a RIS 150 is shown as assisting communication between a network node 110 and a UE 200 over wireless links 120, 130, 140. In this respect, the UE 200 and the network node 110 communicate over a direct link, as represented by wireless link 140, and an indirect link via the RIS 150, as represented by wireless links 120, 130. In some examples the network node 110 is a transceiver point, an access point, an integrated access and backhaul node, a base station, a repeater, a gNB, or the like.

**Fig. 2** is a schematic illustration of an example RIS 150. The RIS 150 comprises a controller entity 190 and a reflector entity 170, comprising a meta-surface or other type of array structure with reflecting antenna elements 160. The controller entity 190 is configured to control the reflection angle of the reflector entity 170 for reflecting radio waves over the indirect wireless link 120, 130 between the network node 110 and the UE 200. The controller entity 190 further is provided with transceiver circuitry for communicating with the UE 200 over a control channel (as indicated by the wireless link 180 regarding whether or not the RIS 150 should assist the UE 200 for communication with the network node 110. In further detail, by the controller entity 190 controlling the impedances of the respective reflecting antenna elements 160, the reflection angle θr of an incoming radio wave, or beam, having an angle of incidence θi, can be adapted according to the generalized Snell's law. Fig. 2 only illustrates one example implementation of the RIS 150 and the implementation might differ dependent on the type of RIS 150. Usage of the RIS 150 can vary, but in general the RIS can be configured to reflect wireless signals in a controlled manner, e.g., to steer transmitted signals in a certain direction. This could for example be used to improve overall system coverage, range, and efficiency.

As noted above, the RIS 150 (or actually, the controller entity 190) might fail to identify which of the UEs 200 that should be supported by the RIS 150.

As further noted above, this is due to the fact that a plurality of UEs 200 might send request signals within some given time interval, or that that one UE 200 sends a plurality of request signals for the UE 200 to be continuously supported by the RIS 150, which causes the RIS 150 (or actually, the controller entity 190) to be overloaded with request signals.

One way to address this issue is to ensure that request signals are sent from the UEs 200 only when deemed relevant, needed, and meaningful. This requires some selection to be made by the UEs 200 regarding if and when to send request signals.

One way to achieve this selection is to configure the UEs 200 with some conditions that must be fulfilled for the UEs 200 to send the request signal. This requires on the one hand that suitable conditions can be identified and on the other hand that the conditions can actually be evaluated.

The embodiments disclosed herein therefore relate to techniques for requesting support of multipath wireless communication for the UE 200 via an RIS 150. In order to obtain such techniques, there is provided a UE 200, a method performed by the UE 200, a computer program product comprising code, for example in the form of a computer program, that when run on a UE 200, causes the UE 200 to perform the method.

At least some embodiments are based on that the UE 300 evaluates if some conditions are fulfilled, and that transmission of a request signal for the RIS to be activated is only triggered when the conditions are fulfilled. As will be disclosed further below, these conditions refer to communication requirements, hardware components of the UE 200, and the radio environment of the UE 200.

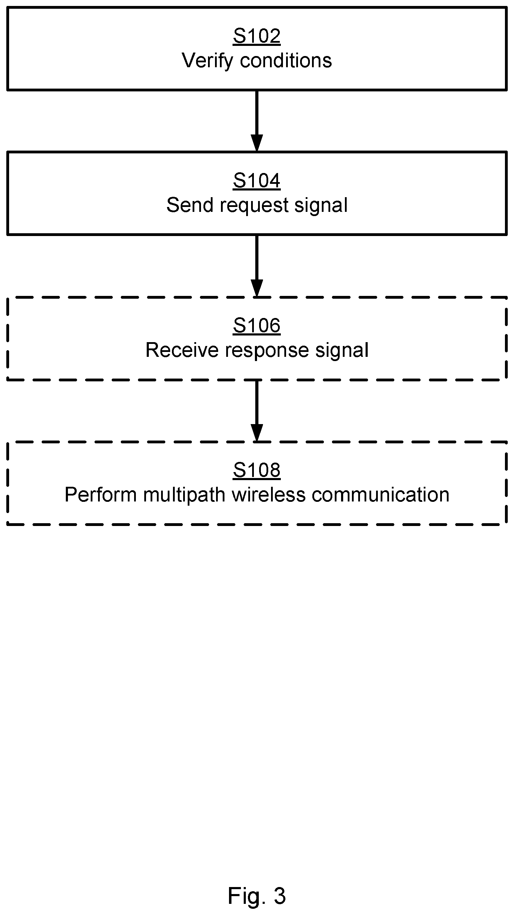

**Fig. 3** is a flowchart illustrating embodiments of methods for requesting support of multipath wireless communication for the UE 200 via an RIS 150. The methods are performed by the UE 200. The methods are advantageously provided as computer programs 720.

The UE 200 determines if one or more conditions are fulfilled for the UE 200 to trigger the transmission of a request signal for the RIS to be activated.

S102: The UE 200 verifies conditions pertaining to that a communication requirement for an application run in the UE 200 is fulfilled, that hardware components of the UE 200 are available for multipath wireless communication in a radio environment of the UE 200, and that the radio environment is not supportive of the multipath wireless communication unless the RIS 150 is activated to support the UE 200.

The evaluation of the conditions could be performed by identifying that the UE 200 has a certain data communication need, that the UE 200 has a capability to communicate data with a higher multiple-input multiple-output (MIMO) rank compared to a current usage, and that the UE 200 is provided with antenna panels available for the communication. The data communication need could pertain to that a certain traffic type (e.g., need for a higher throughput) is required, or that some data service requires high reliability communication with a certain level of channel multipath components.

S104: The UE 200, in response to having verified the conditions in S102, sends a request signal to a controller entity 190 of the RIS 150 to activate the RIS 150 to reflect beams of wireless signals as transmitted and/or received by the UE 200.

In some examples, the wireless signals are by the UE 200 transmitted towards a network node 110 or received from the network node 110. Thus, in some examples, the RIS 150 reflects signals from the UE direction towards the network node 110, and from the network node direction towards the UE 200.

Advantageously, this method resolves the above issues, thereby reducing the risks of the RIS (actually, the controller entity) to be overloaded.

Advantageously, this method ensures that request signals are sent from the UE only when deemed relevant, needed, and meaningful, and hence only when there is an opportunity for the UE to take benefit from support by the RIS.

Advantageously, this method enables the UE to send a request signal only when some conditions are fulfilled
Advantageously, this method enables the RIS (actually, the controller entity) to receive request signals only when support by the RIS is beneficial for the UE.

Advantageously, this method does not require any modification of the functionality of the RIS.

Advantageously, this method enables the amount of control signalling to be reduced. Such a reduction of control signaling reduces the interference levels in the system and reduces the need to allocate transmit resources for the wireless spectrum for control signaling.

Advantageously, this method enables the energy consumption in the UE as well as in the RIS to be reduced. This is due to lower number of request signals are transmitted by the UE and due to less request signals to be received, processed, and evaluated in the RIS (actually, the controller entity).

Embodiments relating to further details of requesting support of multipath wireless communication for the UE 200 via an RIS 150 as performed by the UE 200 will now be disclosed with continued reference to Fig. 3.

There could be different examples of communication requirements. In some non-limiting examples, the communication requirement pertains to any, or any combination of: a service requirement (e.g., expressed in terms of a quality of service level) of the application, a wireless communication protocol requirement for transmission and/or reception of the wireless signals, a current radio resource control (RRC) state of the UE 200. In this respect, whether or not the communication requirement for the application run in the UE 200 is fulfilled could be determined according to some evaluation. In some examples, the communication requirement is fulfilled as soon as the UE is in an active communication mode, such as a RRC connected state. In some examples, the communication requirement is fulfilled when a certain quality of service level is applied to a data session. In some examples, the communication requirement is fulfilled when the signal quality on a received signal from the network node 110 is below a threshold. Activating a higher order MIMO rank or a higher number of utilized antenna panels in the UE 200 might increase the instantaneous energy consumption within the UE 200. However, it might also be so that since the MIMO rank is increased, the transmit power of antenna panel utilized for the direct link, as represented by wireless link 140, to the network node 110 (if each antenna panel is provided with its own power amplifier) might decrease. Hence, even if two antenna panels need to be powered instead of one, this does not imply that the power consumption is doubled. Still, the UE 200 might need to decide whether to prioritize low energy consumption or utilizing additional multi-path components in the channel.

There could be different examples of how the availability of the hardware components is defined. In some non-limiting examples, the availability of the hardware components pertains to any, or any combination of: the number of antennas at the UE 200 available for the multipath wireless communication, availability of a modem in the UE 200 for performing the multipath wireless communication, availability of processing capability in the UE 200 for processing the wireless signals.

There could be different examples of how the support of the multipath wireless communication is defined. In some non-limiting examples, the support of the multipath wireless communication is defined by any, or any combination of: the number of available radio frequency chains in the UE 200, the number of communication layers supported by the UE 200, the rank used by the UE 200, which multipath wireless communication protocols that are supported by the UE 200. In some examples, the UE 200 is considered to support multipath wireless communication when a certain communication feature is activated (such as carrier aggregation, dual connectivity), that the UE 200 is running, or at least is capable of running, a certain communication protocol, and/or that the UE 200 is using, or at least capable of using, a certain carrier frequency.

As from S 102, one condition for the UE 200 to in S104 send the request signal is that the radio environment is not supportive of the multipath wireless communication unless the RIS 150 is activated to support the UE 200. Further aspects of how the radio environment can be verified will be disclosed next.

In some aspects, the UE 200 performs an evaluation to determine whether or not the UE 200 would benefit from a larger number of multipath components in the wireless communication. If this is the case, then it can be verified that the radio environment is supportive of the multipath wireless communication. Hence, in some embodiments, verifying that the radio environment is supportive of the multipath wireless communication involves evaluating the radio environment for presence of multipath components. In this respects, one condition for the UE 200 to in S104 send the request signal could therefore be that the radio environment lacks multipath components.

In some aspects, the UE 200 takes a measured level of interference in the radio environment into account to determine whether or not the UE 200 would benefit from a larger number of multipath components in the wireless communication. Hence, in some embodiments, verifying that the radio environment is supportive of the multipath wireless communication involves evaluating the radio environment for presence of interference. One benefit from this is that it allows the transmit power of the transmit power of antenna panel utilized for the direct link, as represented by wireless link 140, to the network node 110 (if each antenna panel is provided with its own power amplifier) to be decreased. This might reduce the interference level in the cell in which the UE 200 is served.

In some embodiments, the radio environment is evaluated within a time window. In this way, the UE 200 might determine if the radio environment is worse than some reference level, e.g., set by some threshold value, longer than some given time period. This time period may be represented by a sliding time window, such that the UE 200 can evaluate the most recent characteristics of the radio environment. As an illustrative example, the sliding window might have a length from 100 ms to 10 s, or the like.

There could be different orders in which the verification of the conditions in S 102 is performed.

According to a first example, the verification of radio environment support is only performed upon the verification of communication requirement and/or hardware availability is/are successful. That is, in some embodiments, that the radio environment is supportive of the multipath wireless communication only is verified upon having verified that the communication requirement for the application run in the UE 200 is fulfilled and/or upon having verified that that the hardware components of the UE 200 are available.

According to a second example, the verification of communication requirement is only performed upon the verification of hardware availability is successful. That is, in some embodiments, that the communication requirement for the application run in the UE 200 is fulfilled only is verified upon having verified that that the hardware components of the UE 200 are available.

According to a third example, the verification of hardware availability is only performed upon verification of communication requirement is successful. That is, in some embodiments, that the hardware components of the UE 200 are available only is verified upon having verified that the communication requirement for the application run in the UE 200 is fulfilled.

The UE 200 might be equipped with a modem entity and an application entity. These entities might be separated in a smaller or larger extent in different software and hardware blocks, depending on different implementations of the UE 200. In this respect, the modem entity might be configured to support wireless communication according to one or more radio protocols. In this way, the modem entity might be configured to perform the multipath wireless communication. Further, the application entity might be configured to support one or more higher level applications as well to control operations of the modem entity by means of transmitting and receiving data which the modem entity is responsible to communicate wirelessly. In some embodiments, the verifying in S 102 is, in the UE 200, performed by the modem entity for performing the multipath wireless communication.

There could be different ways in which the request signal is sent in S 104.

In some examples, the request signal is sent as a Bluetooth signal, a wireless local area network signal, a sidelink signal, or a device-to-device signal (e.g., using some 3GPP protocol). In this way, the controller entity 190 can be made aware of that there is a device (i.e., the UE 200) within proximity which is seeking RIS support.

In some examples, the request signal comprises only the minimum information needed to indicate to the controller entity 190 that the UE 200 requests the RIS 150 to be activated to reflect beams of wireless signals as transmitted and/or received by the UE 200. In other examples, the request signal comprises additional information that can be useful by the controller entity 190 when determining whether the RIS 150 is to be activated to reflect beams of wireless signals as transmitted and/or received by the UE 200. One example of such additional information is priority information. Therefore, in some embodiments, the request signal comprises a priority indication for the wireless signals to be reflected by the RIS 150. In this way, the UE 200 might indicate a priority level, or criticality level, or a quantified impact to quality of service QoS, which can assist the controller entity 190 to arbitrate in case of conflicting request from multiple UEs 200.

In some aspects, the controller entity 190 activates the RIS 150 for reflection of the wireless signals. An activation for reflection may in some examples be performed by adjusting one or more antenna elements in the RIS 150 to adjust the signal reflections in a direction towards the UE 200, or via further reflections on objects that enhances the communication path for the UE 200. An activation for reflection may in some examples be performed by adjusting one or more antenna elements of the RIS 150 to adjust the signal reflections in a direction towards a network node 110 with which the UE 200 is communicating. The controller entity 190 then notifies the UE 200 of this. Therefore, in some embodiments, the UE 200 is configured to perform (optional) steps S106 and S108.

S106: The UE 200 receives a response signal from the controller entity 190 of the RIS 150 that the RIS 150 has been activated for reflection of the wireless signals.

S108: The UE 200 performs the multipath wireless communication, by directing at least one path of the multipath wireless communication for transmission and/or reception of the wireless signals to be reflected by the RIS 150 and directing at least one other path of the multipath wireless communication for transmission and/or reception of the wireless signals to not be reflected by the RIS 150.

As in Fig. 1, the multipath wireless communication might be performed between the UE 200 and a network node 110 providing network access to the UE 200, where the UE 200 and the network node 110 communicate over a direct link, as represented by wireless link 140, and an indirect link via the RIS 150, as represented by wireless links 120, 130. One path of the multipath wireless communication is thus defined by wireless link 140 and another path of the multipath wireless communication is defined by wireless links 120, 130.

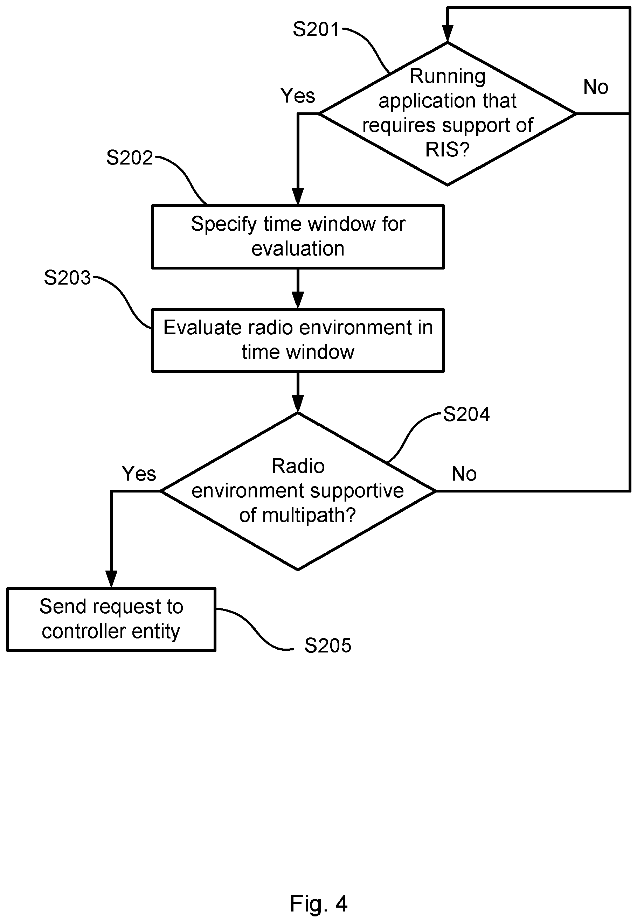

One particular embodiment, as based on the above disclosed embodiments, aspects, and examples, for a UE 200 to request support of multipath wireless communication for the UE 200 via an RIS 150 will be disclosed next with reference to the flowchart **Fig. 4****.**

S201: It is checked if the UE 200 is running an application with a communication requirement that requires support of the RIS 150. It is also checked if hardware components of the UE 200 are available for multipath wireless communication in a radio environment of the UE 200. If yes, step S202 is entered. Else, step S201 can be entered again after some time delay.

S202: A time window is specified in which the radio environment is to be evaluated.

S203: The radio environment is, in the time window, evaluated for any presence of multipath components.

S204: It is checked if the radio environment is supportive of multipath wireless communication with or without the support of the RIS. Step S205 is entered if the radio environment is not supportive of the multipath wireless communication unless the RIS 150 is activated to support the UE 200. Else, step S201 can be entered again after some time delay.

S205: The UE 200 sends a request signal to the controller entity 190 of the RIS 150 to activate the RIS 150 to reflect beams of wireless signals as transmitted and/or received by the UE 200.

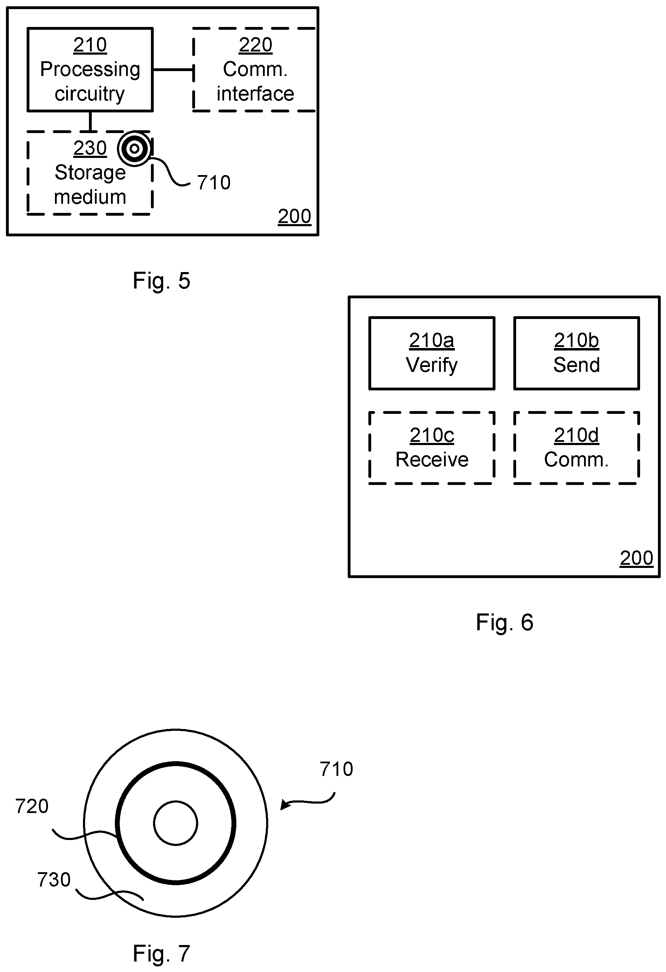

**Fig. 5** schematically illustrates, in terms of a number of functional units, the components of a UE 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 710 (as in Fig. 7), e.g. in the form of a storage medium 230. The processing circuitry 210 may further be provided as at least one application specific integrated circuit (ASIC), or field programmable gate array (FPGA).

Particularly, the processing circuitry 210 is configured to cause the UE 200 to perform a set of operations, or steps, as disclosed above. For example, the storage medium 230 may store the set of operations, and the processing circuitry 210 may be configured to retrieve the set of operations from the storage medium 230 to cause the UE 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The UE 200 may further comprise a communications (comm.) interface 220 at least configured for communications with other entities, functions, nodes, and devices, as illustrated in Fig. 1. As such the communications interface 220 may comprise one or more transmitters and receivers, comprising analogue and digital components. The processing circuitry 210 controls the general operation of the UE 200 e.g. by sending data and control signals to the communications interface 220 and the storage medium 230, by receiving data and reports from the communications interface 220, and by retrieving data and instructions from the storage medium 230. Other components, as well as the related functionality, of the UE 200 are omitted in order not to obscure the concepts presented herein.

**Fig. 6** schematically illustrates, in terms of a number of functional modules, the components of a UE 200 according to an embodiment. The UE 200 of Fig. 6 comprises a number of functional modules; a verify module 210a configured to perform step S102, and a send module 210b configured to perform step S104. The UE 200 of Fig. 6 may further comprise a number of optional functional modules, such as any of a receive module 210c configured to perform step S106, and a communicate (Comm.) module 210d configured to perform step S108. In general terms, each functional module 210a:210d may in one embodiment be implemented only in hardware and in another embodiment with the help of software, i.e., the latter embodiment having computer program instructions stored on the storage medium 230 which when run on the processing circuitry makes the UE 200 perform the corresponding steps mentioned above in conjunction with Fig 6. It should also be mentioned that even though the modules correspond to parts of a computer program, they do not need to be separate modules therein, but the way in which they are implemented in software is dependent on the programming language used. Preferably, one or more or all functional modules 210a:210d may be implemented by the processing circuitry 210, possibly in cooperation with the communications interface 220 and/or the storage medium 230. The processing circuitry 210 may thus be configured to from the storage medium 230 fetch instructions as provided by a functional module 210a:210d and to execute these instructions, thereby performing any steps as disclosed herein.

**Fig. 7** shows one example of a computer program product 710 comprising computer readable storage medium 730. On this computer readable storage medium 730, a computer program 720 can be stored, which computer program 720 can cause the processing circuitry 210 and thereto operatively coupled entities and devices, such as the communications interface 220 and the storage medium 230, to execute methods according to embodiments described herein. The computer program 720 and/or computer program product 710 may thus provide means for performing any steps as herein disclosed.

In the example of Fig. 7, the computer program product 710 is illustrated as an optical disc, such as a CD (compact disc) or a DVD (digital versatile disc) or a Blu-Ray disc. The computer program product 710 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 720 is here schematically shown as a track on the depicted optical disk, the computer program 720 can be stored in any way which is suitable for the computer program product 710.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A user equipment, UE, (200) for requesting support of multipath wireless communication for the UE (200) via a reconfigurable intelligent surface, RIS (150), the UE (200) comprising processing circuitry (210), the processing circuitry being configured to cause the UE (200) to:
verify conditions pertaining to that a communication requirement for an application run in the UE (200) is fulfilled, that hardware components of the UE (200) are available for multipath wireless communication in a radio environment of the UE (200), and that the radio environment is not supportive of the multipath wireless communication unless the RIS (150) is activated to support the UE (200); and in response thereto:
send a request signal to a controller entity (190) of the RIS (150) to activate the RIS (150) to reflect beams of wireless signals as transmitted and/or received by the UE (200).

2. The UE (200) according to claim 1, wherein the communication requirement pertains to any, or any combination of: a service requirement of the application, a wireless communication protocol requirement for transmission and/or reception of the wireless signals, a current radio resource control, RRC, state of the UE (200).

3. The UE (200) according to any preceding claim, wherein the availability of the hardware components pertains to any, or any combination of: number of antennas at the UE (200) available for the multipath wireless communication, availability of a modem in the UE (200) for performing the multipath wireless communication, availability of processing capability in the UE (200) for processing the wireless signals.

4. The UE (200) according to any preceding claim, wherein the support of the multipath wireless communication is defined by any, or any combination of: number of available radio frequency chains in the UE (200), number of communication layers supported by the UE (200), rank used by the UE (200), multipath wireless communication protocols supported by the UE (200).

5. The UE (200) according to any preceding claim, wherein verifying that the radio environment is supportive of the multipath wireless communication involves evaluating the radio environment for presence of multipath components.

6. The UE (200) according to any preceding claim, wherein verifying that the radio environment is supportive of the multipath wireless communication involves evaluating the radio environment for presence of interference.

7. The UE (200) according to claim 5 or 6, wherein the radio environment is evaluated within a time window.

8. The UE (200) according to any preceding claim, wherein that the radio environment is supportive of the multipath wireless communication only is verified upon having verified that the communication requirement for the application run in the UE (200) is fulfilled and/or upon having verified that that the hardware components of the UE (200) are available.

9. The UE (200) according to any preceding claim, wherein that the communication requirement for the application run in the UE (200) is fulfilled only is verified upon having verified that that the hardware components of the UE (200) are available.

10. The UE (200) according to any of claims 1 to 8, wherein that the hardware components of the UE (200) are available only is verified upon having verified that the communication requirement for the application run in the UE (200) is fulfilled.

11. The UE (200) according to any preceding claim, wherein the request signal comprises a priority indication for the wireless signals to be reflected by the RIS (150).

12. The UE (200) according to any preceding claim, wherein the request signal is sent as a Bluetooth signal, a wireless local area network signal, a sidelink signal, or a device-to-device signal.

13. The UE (200) according to any preceding claim, the processing circuitry further being configured to cause the UE (200) to:
receive a response signal from the controller entity (190) of the RIS (150) that the RIS (150) has been activated for reflection of the wireless signals; and
perform the multipath wireless communication, by directing at least one path of the multipath wireless communication for transmission and/or reception of the wireless signals to be reflected by the RIS (150) and directing at least one other path of the multipath wireless communication for transmission and/or reception of the wireless signals to not be reflected by the RIS (150).

14. A method for requesting support of multipath wireless communication for a user equipment, UE, (200) via a reconfigurable intelligent surface, RIS (150), wherein the method is performed by the UE (200), and wherein the method comprises:
verifying (S102) conditions pertaining to that a communication requirement for an application run in the UE (200) is fulfilled, that hardware components of the UE (200) are available for multipath wireless communication in a radio environment of the UE (200), and that the radio environment is not supportive of the multipath wireless communication unless the RIS (150) is activated to support the UE (200); and in response thereto:
sending (S104) a request signal to a controller entity (190) of the RIS (150) to activate the RIS (150) to reflect beams of wireless signals as transmitted and/or received by the UE (200).

15. A computer program (720) for requesting support of multipath wireless communication for a user equipment, UE, (200) via a reconfigurable intelligent surface, RIS (150), the computer program comprising computer code which, when run on processing circuitry (210) of the UE (200), causes the UE (200) to:
verify (S102) conditions pertaining to that a communication requirement for an application run in the UE (200) is fulfilled, that hardware components of the UE (200) are available for multipath wireless communication in a radio environment of the UE (200), and that the radio environment is not supportive of the multipath wireless communication unless the RIS (150) is activated to support the UE (200); and in response thereto:
send (S104) a request signal to a controller entity (190) of the RIS (150) to activate the RIS (150) to reflect beams of wireless signals as transmitted and/or received by the UE (200).

## Patentansprüche

1. Benutzereinrichtung, UE, (200) zum Anfordern von Unterstützung von drahtloser Mehrwegekommunikation für die UE (200) über eine rekonfigurierbare intelligente Oberfläche, RIS, (150) der UE (200), die Verarbeitungsschaltungsanordnung (210) umfasst, wobei die Verarbeitungsschaltungsanordnung dazu ausgelegt ist, die UE (200) zu Folgendem zu veranlassen:
Überprüfen von Bedingungen bezüglich dessen, ob eine Kommunikationsanforderung für eine Anwendung erfüllt ist, die auf der UE (200) ausgeführt wird, ob Hardwarekomponenten der UE (200) für drahtlose Mehrwegekommunikation in einer Funkumgebung der UE (200) verfügbar sind und ob die Funkumgebung die drahtlose Mehrwegekommunikation nicht unterstützt, sofern nicht die RIS (150) aktiviert ist, um die UE (200) zu unterstützen; und in Reaktion darauf:
Senden eines Anforderungssignals an eine Steuerungsentität (190) der RIS (150) zum Aktivieren der RIS (150), um Strahlen von Drahtlossignalen zu reflektieren, die von der UE (200) gesendet und/oder empfangen werden.

2. UE (200) nach Anspruch 1, wobei die Kommunikationsanforderung eines oder eine Kombination von Folgenden betrifft: eine Dienstanforderung der Anwendung, eine Drahtloskommunikationsprotokollanforderung zum Senden und/oder Empfangen der Drahtlossignale, einen aktuellen Funkressourcensteuerungszustand, RRC-Zustand, der UE (200).

3. UE (200) nach einem der vorhergehenden Ansprüche, wobei die Verfügbarkeit der Hardwarekomponenten eines oder eine Kombination von Folgenden betrifft: Anzahl von Antennen an der UE (200), die für die drahtlose Mehrwegekommunikation verfügbar sind, Verfügbarkeit eines Modems in der UE (200) zum Durchführen der drahtlosen Mehrwegekommunikation, Verfügbarkeit von Verarbeitungskapazität in der UE (200) zum Verarbeiten der Drahtlossignale.

4. UE (200) nach einem der vorhergehenden Ansprüche, wobei die Unterstützung der drahtlosen Mehrwegekommunikation durch eines oder eine Kombination von Folgenden definiert ist: Anzahl verfügbarer Hochfrequenzketten in der UE (200), Anzahl von Kommunikationsschichten, die von der UE (200) unterstützt werden, Rang, der von der UE (200) verwendet wird, Protokolle für drahtlose Mehrwegekommunikation, die von der UE (200) unterstützt werden.

5. UE (200) nach einem der vorhergehenden Ansprüche, wobei das Überprüfen, ob die Funkumgebung die drahtlose Mehrwegekommunikation unterstützt, Beurteilen der Funkumgebung hinsichtlich des Vorhandenseins von Mehrwegekomponenten umfasst.

6. UE (200) nach einem der vorhergehenden Ansprüche, wobei das Überprüfen, ob die Funkumgebung die drahtlose Mehrwegekommunikation unterstützt, Beurteilen der Funkumgebung hinsichtlich des Vorhandenseins von Interferenz umfasst.

7. UE (200) nach Anspruch 5 oder 6, wobei die Funkumgebung innerhalb eines Zeitfenster beurteilt wird.

8. UE (200) nach einem der vorhergehenden Ansprüche, wobei, ob die Funkumgebung die drahtlose Mehrwegekommunikation unterstützt, erst überprüft wird, nachdem überprüft wurde, ob die Kommunikationsanforderung für die in der UE (200) ausgeführte Anwendung erfüllt ist, und/oder nachdem überprüft wurde, ob die Hardwarekomponenten der UE (200) verfügbar sind.

9. UE (200) nach einem der vorhergehenden Ansprüche, wobei, ob die Kommunikationsanforderung für die in der UE (200) ausgeführte Anwendung erfüllt ist, erst überprüft wird, nachdem überprüft wurde, ob die Hardwarekomponenten der UE (200) verfügbar sind.

10. UE (200) nach einem der Ansprüche 1 bis 8, wobei, ob die Hardwarekomponenten der UE (200) verfügbar sind, erst überprüft wird, nachdem überprüft wurde, ob die Kommunikationsanforderung für die in der UE (200) ausgeführte Anwendung erfüllt ist.

11. UE (200) nach einem der vorhergehenden Ansprüche, wobei das Anforderungssignal eine Prioritätsangabe für die Drahtlossignale umfasst, die von der RIS (150) reflektiert werden sollen.

12. UE (200) nach einem der vorhergehenden Ansprüche, wobei das Anforderungssignal als ein Bluetooth-Signal, ein Signal eines drahtlosen lokalen Netzwerks, ein Sidelink-Signal oder ein Vorrichtung-zu-Vorrichtung-Signal gesendet wird.

13. UE (200) nach einem der vorhergehenden Ansprüche, wobei die Verarbeitungsschaltungsanordnung ferner dazu ausgelegt ist, die UE (200) zu Folgendem zu veranlassen:
Empfangen eines Antwortsignals von der Steuerungsentität (190) der RIS (150), dass die RIS (150) zur Reflexion der Drahtlossignale aktiviert wurde; und
Durchführen der drahtlosen Mehrwegekommunikation durch Anweisen mindestens eines Pfades der drahtlosen Mehrwegekommunikation zum Senden und/oder Empfangen der von der RIS (150) zu reflektierenden Drahtlossignale und Anweisen mindestens eines anderen Pfades der drahtlosen Mehrwegekommunikation zum Senden und/oder Empfangen der nicht von der RIS (150) zu reflektierenden Drahtlossignale.

14. Verfahren zur Anforderung von Unterstützung von drahtloser Mehrwegekommunikation für eine Benutzereinrichtung, UE, (200) über eine rekonfigurierbare intelligente Oberfläche, RIS, (150), wobei das Verfahren von der UE (200) durchgeführt wird und wobei das Verfahren Folgendes umfasst:
Überprüfen (S102) von Bedingungen bezüglich dessen, ob eine Kommunikationsanforderung für eine Anwendung erfüllt ist, die auf der UE (200) ausgeführt wird, ob Hardwarekomponenten der UE (200) für drahtlose Mehrwegkommunikation in einer Funkumgebung der UE (200) verfügbar sind und ob die Funkumgebung die drahtlose Mehrwegkommunikation nicht unterstützt, sofern nicht die RIS (150) aktiviert ist, um die UE (200) zu unterstützen; und in Reaktion darauf:
Senden (S104) eines Anforderungssignals an eine Steuerungsentität (190) der RIS (150) zum Aktivieren der RIS (150), um Strahlen von Drahtlossignalen zu reflektieren, die von der UE (200) gesendet und/oder empfangen werden.

15. Computerprogramm (720) zum Anfordern von Unterstützung von drahtloser Mehrwegekommunikation für eine Benutzereinrichtung, UE, (200) über eine rekonfigurierbare intelligente Oberfläche, RIS, (150), wobei das Computerprogramm Computercode umfasst, der bei Ausführung auf Verarbeitungsschaltungsanordnung (210) der UE (200) die UE (200) zu Folgendem veranlasst:
Überprüfen (S102) von Bedingungen bezüglich dessen, ob eine Kommunikationsanforderung für eine Anwendung erfüllt ist, die auf der UE (200) ausgeführt wird, ob Hardwarekomponenten der UE (200) für drahtlose Mehrwegkommunikation in einer Funkumgebung der UE (200) verfügbar sind und ob die Funkumgebung die drahtlose Mehrwegkommunikation nicht unterstützt, sofern nicht die RIS (150) aktiviert ist, um die UE (200) zu unterstützen; und in Reaktion darauf:
Senden (S104) eines Anforderungssignals an eine Steuerungsentität (190) der RIS (150) zum Aktivieren der RIS (150), um Strahlen von Drahtlossignalen zu reflektieren, die von der UE (200) gesendet und/oder empfangen werden.

## Revendications

1. Equipement utilisateur, UE, (200) pour demander une prise en charge de communication sans fil à trajets multiples pour l'UE (200) via une surface intelligente reconfigurable, RIS (150), l'UE (200) comprenant une circuiterie de traitement (210), la circuiterie de traitement étant configurée pour amener l'UE (200) à : vérifier des conditions concernant le fait qu'une exigence de communication pour une application exécutée dans l'UE (200) est remplie, le fait que des composants matériels de l'UE (200) sont disponibles pour une communication sans fil à trajets multiples dans un environnement radio de l'UE (200), et le fait que l'environnement radio ne prend pas en charge la communication sans fil à trajets multiples à moins que la RIS (150) ne soit activée pour prendre en charge l'UE (200) ; et en réponse à cela :
envoyer un signal de demande à une entité de commande (190) de la RIS (150) pour activer la RIS (150) pour réfléchir des faisceaux de signaux sans fil tels que transmis et/ou reçus par l'UE (200).

2. UE (200) selon la revendication 1, dans lequel l'exigence de communication concerne l'un quelconque ou toute combinaison de : une exigence de service de l'application, une exigence de protocole de communication sans fil pour une transmission et/ou une réception des signaux sans fil, un état de commande de ressources radio, RRC, actuel de l'UE (200).

3. UE (200) selon l'une quelconque des revendications précédentes, dans lequel la disponibilité des composants matériels concerne l'un quelconque ou toute combinaison de : un nombre d'antennes au niveau de l'UE (200) qui sont disponibles pour la communication sans fil à trajets multiples, une disponibilité d'un modem dans l'UE (200) pour réaliser la communication sans fil à trajets multiples, une disponibilité de capacité de traitement dans l'UE (200) pour traiter les signaux sans fil.

4. UE (200) selon l'une quelconque des revendications précédentes, dans lequel la prise en charge de la communication sans fil à trajets multiples est définie par l'un quelconque ou toute combinaison de : un nombre de chaînes de fréquences radio disponibles dans l'UE (200), un nombre de couches de communication prises en charge par l'UE (200), un rang utilisé par l'UE (200), des protocoles de communication sans fil à trajets multiples pris en charge par l'UE (200).

5. UE (200) selon l'une quelconque des revendications précédentes, dans lequel la vérification que l'environnement radio prend en charge la communication sans fil à trajets multiples implique l'évaluation de l'environnement radio pour une présence de composants à trajets multiples.

6. UE (200) selon l'une quelconque des revendications précédentes, dans lequel la vérification que l'environnement radio prend en charge la communication sans fil à trajets multiples implique l'évaluation de l'environnement radio pour une présence d'interférences.

7. UE (200) selon la revendication 5 ou 6, dans lequel l'environnement radio est évalué au sein d'une fenêtre de temps.

8. UE (200) selon l'une quelconque des revendications précédentes, dans lequel le fait que l'environnement radio prend en charge la communication sans fil à trajets multiples uniquement est vérifié par la vérification que l'exigence de communication pour l'application exécutée dans l'UE (200) est remplie et/ou par la vérification que les composants matériels de l'UE (200) sont disponibles.

9. UE (200) selon l'une quelconque des revendications précédentes, dans lequel le fait que l'exigence de communication pour l'application exécutée dans l'UE (200) est remplie uniquement est vérifié par la vérification que les composants matériels de l'UE (200) sont disponibles.

10. UE (200) selon l'une quelconque des revendications 1 à 8, dans lequel le fait que les composants matériels de l'UE (200) sont disponibles uniquement est vérifié par la vérification que l'exigence de communication pour l'application exécutée dans l'UE (200) est remplie.

11. UE (200) selon l'une quelconque des revendications précédentes, dans lequel le signal de demande comprend une indication de priorité pour les signaux sans fil à réfléchir par la RIS (150).

12. UE (200) selon l'une quelconque des revendications précédentes, dans lequel le signal de demande est envoyé en tant que signal Bluetooth, signal de réseau local sans fil, signal de liaison latérale ou signal de dispositif à dispositif.

13. UE (200) selon l'une quelconque des revendications précédentes, la circuiterie de traitement étant en outre configurée pour amener l'UE (200) à :
recevoir un signal de réponse depuis l'entité de commande (190) de la RIS (150) que la RIS (150) a été activée pour réfléchir les signaux sans fil ; et réaliser la communication sans fil à trajets multiples par la direction d'au moins un trajet de la communication sans fil à trajets multiples pour une transmission et/ou une réception des signaux sans fil à réfléchir par la RIS (150) et la direction d'au moins un autre trajet de la communication sans fil à trajets multiples pour une transmission et/ou une réception des signaux sans fil qui ne doivent pas être réfléchis par la RIS (150).

14. Procédé de demande de prise en charge de communication sans fil à trajets multiples pour un équipement utilisateur, UE, (200) via une surface intelligente reconfigurable, RIS (150), dans lequel le procédé est réalisé par l'UE (200), et dans lequel le procédé comprend :
la vérification (S102) de conditions concernant le fait qu'une exigence de communication pour une application exécutée dans l'UE (200) est remplie, le fait que des composants matériels de l'UE (200) sont disponibles pour une communication sans fil à trajets multiples dans un environnement radio de l'UE (200), et le fait que l'environnement radio ne prend pas en charge la communication sans fil à trajets multiples à moins que la RIS (150) ne soit activée pour prendre en charge l'UE (200) ; et en réponse à cela :
l'envoi (S104) d'un signal de demande à une entité de commande (190) de la RIS (150) pour activer la RIS (150) pour réfléchir des faisceaux de signaux sans fil tels que transmis et/ou reçus par l'UE (200).

15. Programme informatique (720) pour demander une prise en charge de communication sans fil à trajets multiples pour un équipement utilisateur, UE, (200) via une surface intelligente reconfigurable, RIS (150), le programme informatique comprenant un code informatique qui, lorsqu'il est exécuté sur une circuiterie de traitement (210) de l'UE (200), amène l'UE (200) à : vérifier (S102) des conditions concernant le fait qu'une exigence de communication pour une application exécutée dans l'UE (200) est remplie, le fait que des composants matériels de l'UE (200) sont disponibles pour une communication sans fil à trajets multiples dans un environnement radio de l'UE (200), et le fait que l'environnement radio ne prend pas en charge la communication sans fil à trajets multiples à moins que la RIS (150) ne soit activée pour prendre en charge l'UE (200) ; et en réponse à cela :
envoyer (S104) un signal de demande à une entité de commande (190) de la RIS (150) pour activer la RIS (150) pour réfléchir des faisceaux de signaux sans fil tels que transmis et/ou reçus par l'UE (200).
